# DEMANDE DE BREVET EUROPEEN

(11) **EP 4 434 959 A2**
(43) Date de publication de la demande: **25.09.2024**
(21) Numéro de dépôt: 24193941.2
(22) Date de dépôt: 10.12.2018
(51) Int. Cl.: C05F 11/08

(54) **UTILISATION DE PHYCOBILIPROTEINES OU D'UN EXTRAIT EN CONTENANT COMME ENGRAIS**

(30) Priorité: 11.12.2017 FR 1761954
(62) Demande divisionnaire de: 18833276.1
(71) Demandeur: Agro Innovation International, 35400 Saint-Malo (FR)
(72) Inventeur: YVIN, Jean-Claude, SAINT-MALO (FR); CRUZ, Florence, SAINT-MALO (FR); PEREIRA VIEIRA DEVAULT, Mariana Carolina, ITHACA (US); VILLAR, Larissa, SAINT-MALO (FR)
(74) Mandataire: Cabinet Beau de Loménie

(57) **Abrégé**

L'invention concerne l'utilisation de phycobiliprotéines ou d'un extrait en contenant comme engrais, un procédé pour stimuler le tallage et/ou le développement racinaire et/ou le rendement d'une plante, ainsi que des compositions fertilisantes comprenant des phycobiliprotéines ou un extrait en contenant et (i) un amendement et/ou (ii) un engrais autre que des phycobiliprotéines ou un extrait en contenant.

## Description

### DOMAINE TECHNIQUE

L'invention concerne l'utilisation de phycobiliprotéines ou d'un extrait en contenant comme engrais, un procédé pour stimuler le tallage et/ou le développement racinaire et/ou le rendement d'une plante, ainsi que des compositions fertilisantes comprenant des phycobiliprotéines ou un extrait en contenant et (i) un amendement et/ou (ii) un engrais autre que des phycobiliprotéines ou un extrait en contenant.

### ARRIERE-PLAN TECHNOLOGIQUE

Le tallage est une propriété de nombreuses espèces de plantes de l'ordre des monocotylédones, notamment les poacées (graminées), qui correspond à la formation de tiges à partir d'un bourgeon proche de la base d'une plante au niveau d'une zone appelée « plateau de tallage ». Chaque tige est communément appelée une « talle ». En général, chaque talle portera une inflorescence.

Le tallage est un trait agronomique important qui fait l'objet d'un contrôle génétique, hormonal et dépend directement des conditions environnementales. Le tallage est notamment recherché dans la culture de céréales car l'augmentation du nombre de talles est généralement corrélée avec l'augmentation du nombre d'épis. La stimulation du tallage peut donc influer directement sur le rendement.

Le tallage est également recherché pour les gazons afin d'assurer la formation d'un tapis de végétation dense.

Le tallage des céréales est l'un des plus importants stades phénologiques qui se produit dans les mois d'hiver (Janvier-Février en Europe), soumis à des facteurs limitants, comme de mauvaises conditions météorologiques (gel, humidité) qui rendent le sol asphyxié et mal drainé et une intensité limitée de la lumière.

Plusieurs facteurs d'importances diverses peuvent influencer le processus de tallage, par exemple:
- La profondeur des semis. On considère que la meilleure profondeur de semis est à 3-4 cm de la surface du sol, l'énergie du tallage étant optimale à cette profondeur.
- La taille des semences. Les grosses semences ont plus de réserves pour nourrir les plantules et donnent un départ de végétation favorable à un tallage ultérieur satisfaisant.
- La température. Elle est optimale lorsqu'elle est comprise entre 12 et 20°C au moment du tallage. Au-dessous de 6°C, le tallage diminue, et dans certains cas il s'arrête.
- La durée et l'intensité lumineuse. Elle peut dépendre de la densité des plantes au mètre carré.
- La nutrition des plantes. Il s'agit d'un facteur important sur lequel il est possible d'intervenir par l'utilisation de fertilisants, comme les engrais.

Par ailleurs, il semblerait qu'un facteur important qui favorise le processus de tallage est le bon développement racinaire de la plante.

Pour stimuler le tallage des monocotylédones, de nombreuses techniques de culture ont été développées comme l'utilisation d'engrais et de régulateurs de croissance. Les produits utilisés ne sont néanmoins pas toujours efficaces sur le tallage et ne sont pas toujours bons pour l'environnement.

Il existe donc un besoin de pouvoir disposer de nouveaux engrais capables de stimuler le tallage et/ou le développement racinaire d'une plante.

C'est dans ce contexte que le demandeur a mis en évidence, et ceci constitue le fondement de la présente invention, que les phycobiliprotéines ou les extraits en contenant peuvent être utilisés comme engrais, notamment pour stimuler le tallage et/ou le développement racinaire et/ou le rendement d'une plante.

### RESUME DE L'INVENTION

Ainsi, la présente invention, qui trouve application dans le domaine agro-écologique et agricole, vise à proposer un nouvel engrais pour stimuler le tallage et/ou le développement racinaire et/ou le rendement d'une plante.

Selon un premier aspect, l'invention concerne l'utilisation de phycobiliprotéines ou d'un extrait en contenant comme engrais.

Selon un deuxième aspect, l'invention concerne un procédé pour stimuler le tallage et/ou le développement racinaire et/ou le rendement d'une plante, caractérisé en ce qu'il comprend l'apport audit sol d'une quantité efficace de phycobiliprotéines ou d'un extrait en contenant.

Selon un troisième aspect, l'invention concerne une composition fertilisante comprenant des phycobiliprotéines ou un extrait en contenant et (i) un amendement et/ou (ii) un engrais autre que des phycobiliprotéines ou un extrait en contenant.

### DESCRIPTION DETAILLEE DE L'INVENTION

Le terme « extrait » désigne le produit résultant d'une extraction à partir d'une source. Par exemple, la source peut être une source biologique, comme des cellules. Lorsqu'il s'agit de cellules, le terme « extrait » désigne donc le produit résultant de l'extraction du contenu de cellules. Ainsi, par exemple, le terme « extrait de cyanobactéries » désigne le produit résultant de l'extraction du contenu des cellules de cyanobactéries.

Les termes « extrait contenant des phycobiliprotéines » et « extrait de phycobiliprotéines » sont interchangeables et désignent un extrait obtenu à partir d'une source de phycobiliprotéines. L'extrait contenant des phycobiliprotéines mis en oeuvre dans le cadre de la présente invention est de préférence un extrait de microalgues contenant des phycobiliprotéines, de préférence un extrait de cyanobactéries, de rhodophycées, de glaucocystophycées ou de cryptophycées. Un extrait de microalgues contenant des phycobiliprotéines selon l'invention, est donc le résultat de l'extraction dans un solvant, par exemple de l'eau, des phycobiliprotéines présentes dans les cellules des microalgues. La masse sèche de phycobiliprotéines dans l'extrait contenant des phycobiliprotéines est d'au moins 5% de la masse totale de matière sèche de l'extrait, par exemple au moins 10%, au moins 15%, 20% par exemple entre 5% et 20%, entre 10% et 15%. Les techniques d'extraction des phycobiliprotéines sont largement décrites dans la littérature et faciles à mettre en oeuvre par l'homme de l'art, par exemple l'extraction aqueuse. Des techniques d'extraction classiquement utilisées sont détaillées plus loin. L'extrait contenant des phycobiliprotéines mis en oeuvre dans le cadre de la présente invention peut être enrichi en phycobiliprotéines. Ainsi, la masse sèche de phycobiliprotéines dans un extrait enrichi en phycobiliprotéines peut être portée à au moins 20% de la masse totale de matière sèche de l'extrait, par exemple au moins 25%, au moins 30%, 35%, 40%, 50% par exemple entre 20% et 50%, entre 25% et 40%, entre 25% et 35%, entre 25% et 30%. Des techniques d'enrichissement des phycobiliprotéines sont décrites dans la littérature et faciles à mettre en oeuvre par l'homme de l'art, par exemple la précipitation des phycobiliprotéines par addition de sulfate d'ammonium et éventuellement une ultrafiltration des phycobiliprotéines précipitées, par exemple sur une membrane de porosité d'environ 1000 Da.

Le terme « fertilisant » désigne une substance, ou un mélange de substances, naturelle ou d'origine synthétique, utilisée en agriculture, en horticulture et sylviculture, pour améliorer les sols, notamment leur structure, et fertiliser les plantes cultivées. Les fertilisants comprennent les engrais et les amendements.

Le terme « engrais » désigne des matières fertilisantes dont la fonction principale est d'apporter aux plantes des éléments directement utiles à leur nutrition (éléments fertilisants majeurs, éléments fertilisants secondaires et oligo-éléments).

Le terme « amendement » désigne une substance destinée à améliorer la qualité des sols, et notamment destinée à améliorer le pH des sols. Avantageusement, l'amendement est choisi parmi les amendements minéraux basiques de type calcaire et/ou calcaires et magnésiens ; les amendements humifères de type composts ou les fumiers.

Le terme « stimulation du tallage » correspond à l'augmentation du nombre de talles chez une plante. La stimulation du tallage est généralement évaluée en comptant le nombre de talles par plante.

Les phycobiliprotéines utiles selon l'invention sont des protéines polymériques hydrosolubles naturelles. Elles sont constituées d'une partie protéinique de haute masse moléculaire (appelée apoprotéine) et d'un chromophore (appelé biline) lié covalamment à l'apoprotéine. Le chromophore présente un noyau tétrapyrrolique ouvert, responsable de la couleur. Les principaux chromophores décrits dans la littérature sont la phycocyanobiline, la phycoérythrobiline, la phycourobiline et la cryptovioline. Chacun d'eux présente un spectre d'absorption spécifique modifié par les interactions avec l'apoprotéine.

Les phycobiliprotéines sont plus précisément constituées de deux chaînes polypeptidiques homologues, α et β, de respectivement environ 17 et 18kDa. Certaines (les phycoérythrines, voir plus loin) contiennent une sous-unité γ supplémentaire de 30kDa. Les phycobiliprotéines peuvent porter différents chromophores. Les propriétés données par leur composition en chromophores, ainsi que la conformation et l'environnement des chromophores dans la protéine native, ont conduit à la classification des phycobiliprotéines en fonction de leur spectre d'absorption.

Il existe quatre principaux types de phycobiliprotéines :
- l'allophycocyanine (APC ; Amax = 650nm),
- la phycocyanine (PC ; Amax = 620nm),
- la phycoerythrine (PE ; Amax = 565nm), et
- la phycoerythrocyanine (PEC, Amax= 568nm).

Ces types de phycobiliprotéines peuvent coexister dans une même espèce. Néanmoins la phycoérythrine domine chez les Rhodophytes tandis que la phycocyanine est plus abondante et parfois seule présente chez les cyanobactéries.

On trouve les phycobiliprotéines dans les phycobilisomes chez les cyanobactéries, les rhodophycées et les glaucocystophycées, ainsi que libres dans le lumen des thylakoïdes chez les cryptophycées. Organisées sous une architecture appelée phycobilisomes, les phycobiliprotéines constituent les pigments accessoires de la photosynthèse en complément de la chlorophylle. Elles ont une capacité colorante allant du rouge au bleu.

Les phycobiliprotéines constitutives des phycobilisomes sont l'APC et la PC. La PE est présente chez la plupart des algues rouges et dans beaucoup de cyanobactéries. La PEC est présente en grande quantité chez certaines cyanobactéries.

Les phycobiliprotéines représentent 85% de la masse totale des phycobilisomes. Les protéines « incolores » restantes sont des polypeptides de liaison (Tandeau de Marsac et Cohen-Bazire 1977).

La présente invention découle des avantages surprenants mis en évidence par les inventeurs de l'effet des phycobiliprotéines ou d'un extrait en contenant sur le tallage et/ou le développement racinaire d'une plante.

Ainsi, l'invention concerne l'utilisation de phycobiliprotéines ou d'un extrait en contenant comme engrais, notamment pour stimuler le tallage et/ou le développement racinaire d'une plante.

L'invention concerne également un procédé pour stimuler le tallage et/ou le développement racinaire d'une plante, caractérisé en ce qu'il comprend l'apport audit sol d'une quantité efficace de phycobiliprotéines ou d'un extrait en contenant.

Dans un mode de réalisation préféré selon l'invention, la plante appartient à l'ordre des monocotylédones, de préférence à la famille des poacées. Les inventeurs ont en effet mis en évidence que les phycobiliprotéines ou les extraits en contenant permettent de stimuler le tallage des monocotylédones, en particulier de la famille des poacées. Les poacées, communément appelés les graminées, renferment notamment la plupart des espèces appelées communément « herbes » et « céréales ». Les céréales sont largement cultivées, principalement pour leurs grains, et sont utilisées dans l'alimentation humaine et animale.

Avantageusement, la plante est une poacée, de préférence choisie parmi le blé, le riz, l'orge, l'avoine, le seigle, la canne à sucre, la prairie ou le maïs, de préférence le blé.

Les phycobiliprotéines ou les extraits de phycobiliprotéines sont communément obtenus à partir d'algues, en particulier à partir de microalgues contenant des phycobiliprotéines, en particulier à partir de cyanobactéries, de rhodophycées, de glaucocystophycées ou de cryptophycées.

Dans un mode de réalisation particulier, l'extrait de phycobiliprotéines est un extrait de cyanobactéries, un extrait de rhodophycées, un extrait de glaucocystophycées ou un extrait de cryptophycées. Avantageusement, l'extrait de phycobiliprotéines est un extrait de cyanobactéries, de préférence un extrait de cyanobactéries du genre *Arthrospira,* de préférence *Arthrospira platensis.*

La préparation d'un extrait de phycobiliprotéines ne présente aucune difficulté particulière, de nombreux procédés d'extraction sont décrits dans la littérature. Le procédé d'extraction n'est pas limité à un procédé particulier, et les procédés classiques peuvent être mis en oeuvre pour préparer un extrait de phycobiliprotéines, comme par exemple l'extraction aqueuse.

Les extraits de phycobiliprotéines peuvent être obtenus par un procédé comportant les étapes suivantes : mélange des microalgues sèches avec de l'eau, extraction (séparation solide-liquide) et éventuellement fractionnement et/ou concentration.

Dans un mode de réalisation particulier, l'extrait de phycobiliprotéines est un macérât de microalgues. Dans ce mode de réalisation, l'extrait de phycobiliprotéines est obtenu par macération aqueuse en mélangeant des microalgues préalablement séchées (algues sèches) avec de l'eau à une température et une durée appropriées. Par exemple, les microalgues sèches sont mélangées avec de l'eau à température ambiante pendant 3 heures, le mélange est ensuite centrifugé pour en récupérer la fraction liquide. La fraction liquide peut être utilisée en tant que telle comme extrait de phycobiliprotéines ou peut subir un ou plusieurs traitements ultérieurs, comme par exemple une filtration et/ou une précipitation. En particulier, la précipitation permet d'enrichir l'extrait en phycobiliprotéines.

L'extrait de phycobiliprotéines peut être plus ou moins concentré en phycobiliprotéines selon l'utilisation envisagée. Par exemple, La masse sèche de phycobiliprotéines dans l'extrait contenant des phycobiliprotéines est d'au moins 5% de la masse totale de matière sèche de l'extrait, par exemple au moins 10%, au moins 15%, 20% par exemple entre 5% et 20%, entre 10% et 15%. L'extrait contenant des phycobiliprotéines mis en oeuvre dans le cadre de la présente invention peut être enrichi en phycobiliprotéines. Ainsi, la masse sèche de phycobiliprotéines dans l'extrait contenant des phycobiliprotéines peut être portée à au moins 20% de la masse totale de matière sèche de l'extrait, par exemple au moins 25%, au moins 30%, 35%, 40%, 50% par exemple entre 20% et 50%, entre 25% et 40%, entre 25% et 35%, entre 25% et 30%.

Les techniques d'enrichissement peuvent être de différente nature. Par exemple, il est possible d'utiliser les techniques de dialyse, d'ultrafiltration, de précipitation différentielle, par exemple la dialyse à 1000 Daltons, l'ultrafiltration à 1000 Daltons et/ou la précipitation au sulfate d'ammonium.

Les phycobiliprotéines ou l'extrait en contenant peuvent être apportés au sol sous forme liquide ou sous forme solide. Sous forme solide, les phycobiliprotéines ou l'extrait en contenant peuvent être déshydratés pour une présentation sous forme de poudre sèche hydrosoluble, par exemple, au moyen d'un sécheur à tambour, par atomisation ou par lyophilisation. Sous forme liquide, les phycobiliprotéines ou l'extrait en contenant peuvent être plus ou moins concentrés en phycobiliprotéines selon l'utilisation envisagée.

Les phycobiliprotéines ou l'extrait en contenant permettent d'augmenter le tallage, répondant ainsi aux besoins de croissance de la culture qui s'exprimera notamment en termes d'amélioration de rendement. Il a également été démontré que les phycobiliprotéines ou l'extrait en contenant permettent de stimuler le développement racinaire de la plante.

Avantageusement, l'application aux plantes sera réalisée par voie foliaire ou par voie racinaire.

Les phycobiliprotéines ou un extrait en contenant sont de préférence apportés au sol en une quantité efficace de phycobiliprotéines, par exemple en une quantité de phycobiliprotéines allant de 0,1 à 5 kg/ha, de préférence allant de 0,2 à 3 kg/ha, de préférence en une quantité d'environ 1 kg/ha.

Par « quantité efficace » on entend une quantité suffisante pour augmenter le tallage d'au moins 5%, avantageusement d'au moins 10%, par exemple d'au moins 15%, au moins 20%, au moins 25%, au moins 30%, au moins 35%, au moins 40%, avantageusement d'au moins 30%. Ainsi, dans un mode de réalisation particulier, les phycobiliprotéines ou un extrait en contenant sont apportés au sol dans une quantité suffisante pour augmenter le tallage d'au moins 5%, avantageusement d'au moins 10%, par exemple d'au moins 15%, au moins 20%, au moins 25%, au moins 30%, au moins 35%, au moins 40%, avantageusement d'au moins 30%.

Les phycobiliprotéines ou un extrait en contenant peuvent être utilisés en complément dans des compositions fertilisantes, telles que des engrais, comme stimulant du tallage et/ou du développement racinaire et/ou du rendement d'une plante. De telles compositions permettent de répondre au mieux aux besoins de croissance de la plante qui s'exprimera notamment en termes d'amélioration du rendement.

Ainsi, l'invention concerne également une composition fertilisante comprenant des phycobiliprotéines ou un extrait en contenant et (i) un amendement et/ou (ii) un engrais autre que des phycobiliprotéines ou un extrait en contenant.

A titre d'exemples de fertilisants pouvant être utilisés dans la composition selon l'invention, on citera les amendements calcaires, les amendements organiques et les supports de culture, les engrais racinaires de type NP, PK, NPK, etc., les engrais et/ou biostimulants foliaires ou encore les solutions nutritives racinaires.

Dans un mode de réalisation particulier, l'engrais est une ou plusieurs substances choisies parmi l'urée, le sulfate d'ammonium, le nitrate d'ammonium, le phosphate, le chlorure de potassium, le nitrate de magnésium, le nitrate de manganèse, le nitrate de zinc, le nitrate de cuivre, l'acide phosphorique, le nitrate de potassium et l'acide borique.

La présente invention est illustrée par les exemples non limitatifs suivants.

### DESCRIPTION DES FIGURES

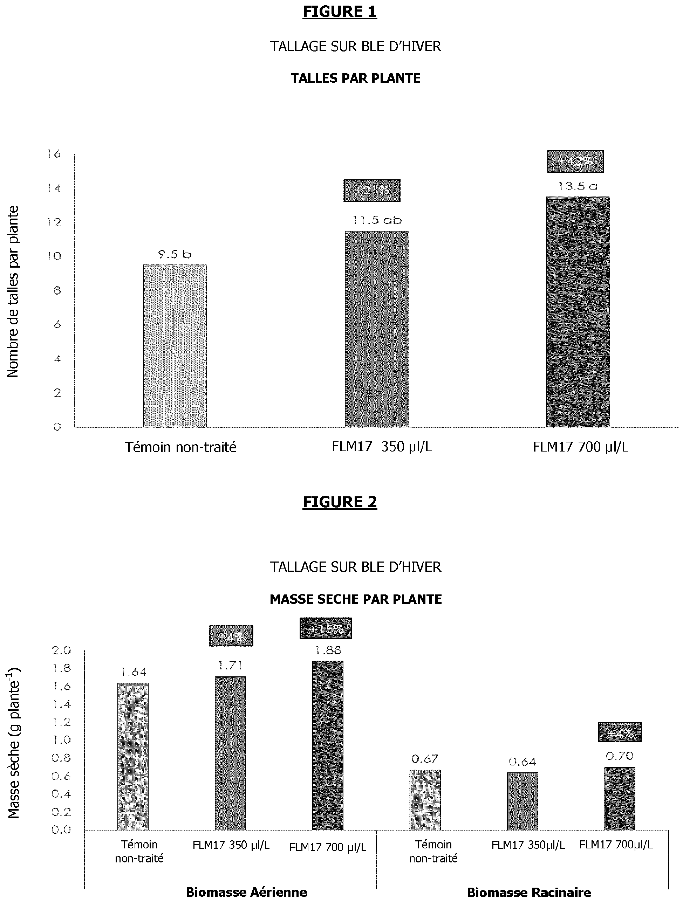

**Figure 1** : Diagramme qui représente le nombre de talles par plante de blé tendre après 29 jours sous apport de l'extrait « FLM17 » à différentes concentrations dans la solution hydroponique soit 350 µl/L et 700 µl/L (et sans apport de l'extrait « FLM17» (Témoin non-traité). L'extrait « FLM17», aux deux concentrations testées, permet de stimuler le tallage.
   Les lettres « a », « b » et « c » correspondent à l'analyse de variance ANOVA : « a », « b » et « c » désignent des groupes statistiques différents à 5% et les groupes « ab » et « bc » signifient que la modalité n'est pas différente du témoin ni de l'autre modalité.
**Figure 2** **:** Diagrammes qui représentent les biomasses aérienne et racinaire sèches produites par des plantes de blé tendre après 29 jours sous apport de l'extrait « FLM17 » à différentes concentrations dans la solution hydroponique soit 350 µl/L et 700 µl/L et sans apport de l'extrait « FLM17 » (Témoin non-traité). L'extrait « FLM17», aux deux concentrations testées, stimule le développement racinaire et aérien.

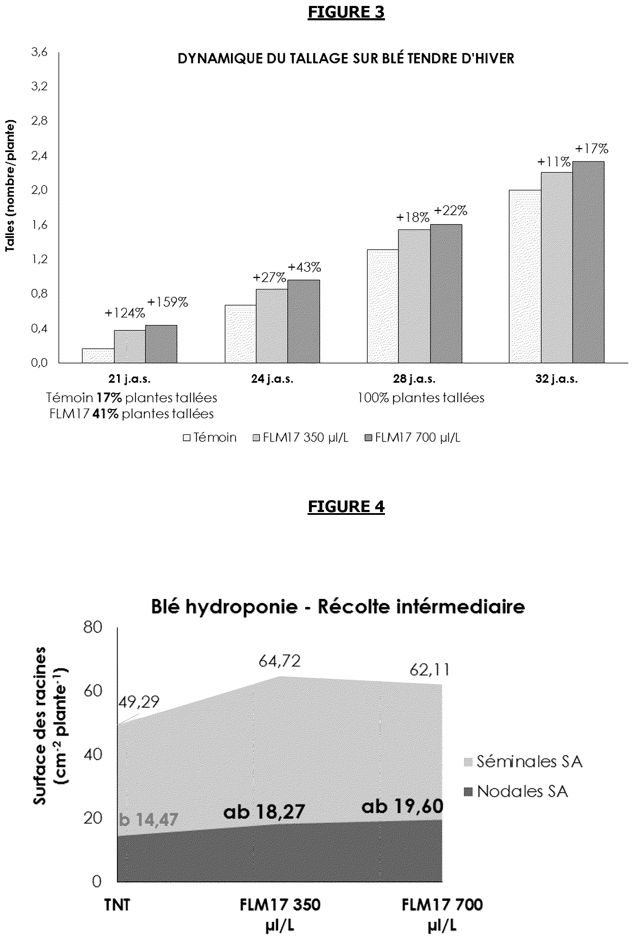

**Figure 3** **:** Diagrammes qui représentent la dynamique de tallage avec et sans l'extrait « FLM17 » établie avec :
   - évolution du nombre de feuilles par plantes entre 21 JAS et 32 JAS (Figure 3a), et
   - évolution du nombre de talles entre 21 JAS et 32 JAS (Figure 3b).

   La Figure 3a montre que pour un même nombre de feuilles, le traitement par FLM17 augmente le nombre de talles.
   La Figure 3b montre notamment que le tallage est plus précoce et plus important avec un apport de l'extrait « FLM17 » aux différentes concentrations dans la solution hydroponique soit 350 µl/L (barres du milieu) et 700 µl/L (barres de droite) comparé au tallage sans apport de l'extrait « FLM17 » (barres de gauche).
**Figure 4** **:** Diagramme qui illustre la morphologie du système racinaire des plantes de blé tendre récoltées après 28 jours après-semis, soit 20 jours sous apport de l'extrait « FLM17 ». Le diagramme montre notamment une augmentation de la surface des racines séminales et des racines nodales avec un apport de l'extrait « FLM17 » aux différentes concentrations dans la solution hydroponique soit 350 µl/L et 700 µl/L comparé à la surface obtenue sans apport de l'extrait « FLM17 » (TNT).

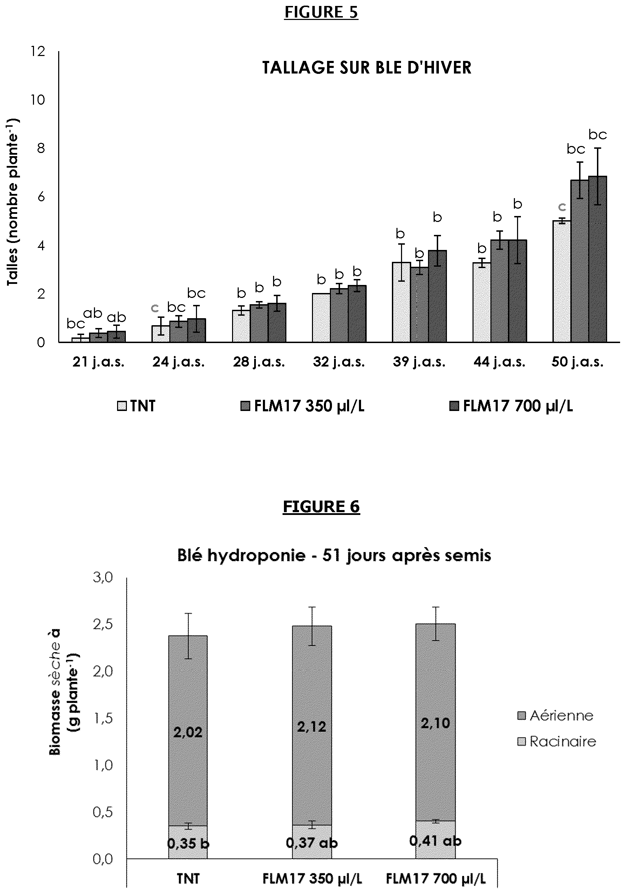

**Figure 5** **:** Diagramme qui représente l'évolution du nombre de talles par plante de blé tendre jusqu'à 43 jours sous apport de l'extrait « FLM17 » (50 JAS) aux différentes concentrations dans la solution hydroponique soit 350 µl/L (barres du milieu) et 700 µl/L (barres de droite). L'extrait « FLM17 », aux deux concentrations testées, stimule le tallage tout au long du développement de la plante. La stimulation est encore plus marquée à 50 JAS.
   Les lettres « a », « b » et « c » correspondent à l'analyse de variance ANOVA : « a », « b » et « c » désignent des groupes statistiques différents à 5% et les groupes « ab » et « bc » signifient que la modalité n'est pas différente du témoin ni de l'autre modalité.
**Figure 6** : Diagramme qui représente la biomasse sèche des plantes des plantes traitées avec l'extrait « FLM17 » et non traitées (TNT) à 51 JAS.
   Les lettres « a », « b » et « c » correspondent à l'analyse de variance ANOVA : « a », « b » et « c » désignent des groupes statistiques différents à 5% et les groupes « ab » et « bc » signifient que la modalité n'est pas différente du témoin ni de l'autre modalité.

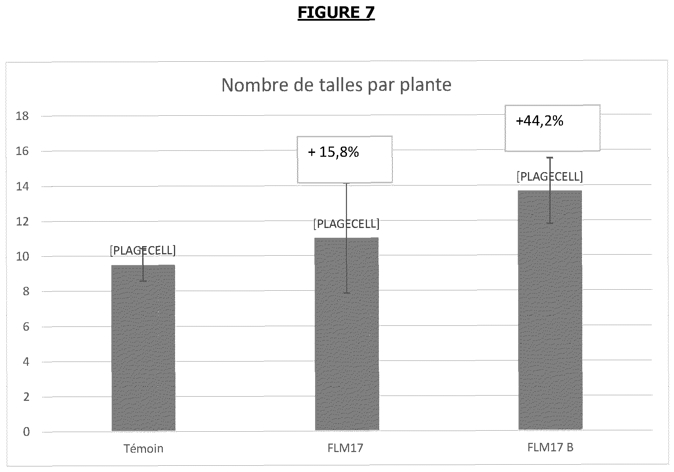

**Figure 7** : Diagramme qui représente le nombre de talles par plante de blé tendre après 29 jours sous apport de l'extrait « FLM17 » à une concentration de 1400 µl/L dans la solution d'hydroponie, sous apport de l'extrait « FLM17 B » à une concentration de 1400 µl/L dans la solution d'hydroponie et sans apport de l'extrait « FLM17 » (Témoin non-traité). Le diagramme démontre que l'enrichissement en phycobiliprotéines de l'extrait FLM17 améliore de façon considérable le tallage du blé.

### EXEMPLES

### Exemple 1 : Préparation d'un extrait contenant des phycobiliprotéines

100 g de microalgues de type *Arthrospira platensis* ont été incorporés dans 0,9 litres d'eau déminéralisée. Le mélange a ensuite été maintenu sous agitation à température ambiante pendant une durée d'environ 3h. Puis le mélange obtenu a été centrifugé à 7000 tours/minute pendant 30 minutes. Cette étape a permis d'extraire dans l'eau les phycobiliprotéines présentes dans les cellules des microalgues. Les phycobiliprotéines se sont alors retrouvées dans le surnageant. Le surnageant a ensuite été récupéré et filtré à 50 µm. Le filtrat ainsi obtenu, correspondant à un extrait contenant des phycobiliprotéines, comprenait entre 6% et 8% en poids d'extrait sec.

La quantité de phycobiliprotéines dans les extraits a été mesurée selon la méthode spectrophotométrique de référence décrite dans Bennett et al. (The Journal of Cell Biology, Volume 58, page 419-435, 1973). Les extraits obtenus selon le procédé décrit ci-dessus ont été titrés entre 5 et 8 g de phycobiliprotéines par litre d'extrait. Ce qui correspond à une teneur en phycobiliprotéines équivalente à 10% de la masse sèche contenue dans l'extrait, c'est-à-dire que la masse sèche de phycobiliprotéines dans l'extrait est de 10% de la masse totale de matière sèche de l'extrait.

Un extrait contenant 7 g de phycobiliprotéines/litre a été dénommé « FLM17 ».

Un procédé alternatif consiste à incorporer 100 g de microalgues de type *Arthrospira platensis* dans 0,9 litres d'eau déminéralisée tamponnée par du tampon phosphate à 5%. Le mélange est ensuite maintenu sous agitation à température de 4°C pendant une durée d'environ 24h. Puis le mélange obtenu est centrifugé à 4000 g pendant 30 minutes. Cette étape permet d'extraire dans l'eau les phycobiliprotéines présentes dans les cellules des microalgues. Les phycobiliprotéines se retrouvent dans le surnageant. Le surnageant est ensuite récupéré et filtré à 50 µm.

### Exemple 2 : Préparation d'un extrait enrichi en phycobiliprotéines

A partir de 500 mL de l'extrait FLM17 obtenu à l'Exemple 1, une précipitation des phycobiliprotéines a été réalisée par addition de sulfate d'ammonium à la dose de 500 g/L de filtrat. La précipitation a été obtenue après agitation du mélange pendant 2 heures à +4°C. Le précipité a été récupéré par centrifugation pendant 30 minutes à 7000 rpm à +4°C.

Le culot de précipitation a été repris dans 500 mL d'eau déminéralisée puis ont été soumis à une ultrafiltration membranaire à volume constant sur une membrane céramique de porosité 1000 Daltons, afin d'éliminer les sels, pour obtenir un extrait enrichi en phycobiliprotéines. L'ultrafiltration a également permis d'éliminer les petites molécules de poids moléculaire inférieur à 1000 Daltons, notamment les phytohormones, telles que les phytohormones connues sous le nom de Auxine (IAA = acide indol-acétique : PM = 175 Da), Zéatine (trans et cis : PM = 219,2 Da) et Zéatine-riboside (PM = 351,3 Da). Cet extrait enrichi en phycobiliprotéines était enrichi 2,5 fois en phycobiliprotéines par rapport à l'extrait FLM17 de départ soit une teneur en phycobiliprotéines de 17,5 g/Litre d'extrait enrichi. Ce qui correspond à une teneur en phycobiliprotéines équivalente à 25% de la masse sèche contenue dans l'extrait enrichi, c'est-à-dire que la masse sèche de phycobiliprotéines dans l'extrait est de 25% de la masse totale de matière sèche de l'extrait.

Cet extrait enrichi en phycobiliprotéines a été dénommé « FLM17 B ».

### Exemple 3 : Effet agronomique de l'extrait de phycobiliprotéines FLM17 obtenu dans l'Exemple 1, sur la phase de tallage d'un blé tendre d'hiver en conditions contrôlées

### Matériels et méthodes

Des graines de blé tendre (*Triticum aestivum*) d'hiver, cv. Rubisko ont été semées dans des caisses noires opaques contenant de la vermiculite. Immédiatement après le semis, le substrat a été arrosé avec de l'eau et les caisses ont été mises à l'abri de la lumière pendant 2 jours. Les plantules ont ensuite été déplacées et maintenues en chambre de croissance pendant 5 jours jusqu'au moment du repiquage.

Au septième jour après le semis (BBCH 11-12) les racines des plantules ont été nettoyées et ces dernières ont été repiquées dans des pots opaques de capacité de 5 litres, à raison de 3 plantes par pot. Un tuyau flexible d'environ 7 mm de diamètre relié à une pompe a été introduit dans chaque pot afin d'assurer l'aération constante de la solution nutritive en contact avec les racines. Ces pots ont été placés dans la même chambre de croissance tout du long de l'essai.

La solution nutritive a été produite selon la recette classique Hoagland, adaptée aux besoins de la culture. Un renouvellement de cette solution pour tous les pots, ainsi que l'apport par voie liquide aux racines de l'extrait « FLM17» aux modalités traitées (Tableau 1) ont eu lieu tous les 2 jours.

**Tableau 1 : Modalités testées sur l'essai en hydroponie sur blé tendre d'hiver.**

| **Modalité** | **Caractéristique de la modalité** |
|---|---|
| 1 | Solution Hoagland (Témoin non-traité) |
| 2 | Solution Hoagland + 350 µl de FLM17 / Litre de solution Hoagland (correspondant à 2,45 mg de phycobiliprotéines/Litre de solution Hoagland) |
| 3 | Solution Hoagland + 700 µl de FLM17 / Litre de solution Hoagland (correspondant à 4,9 mg de phycobiliprotéines/Litre de solution Hoagland) |

Chaque modalité testée comptait 3 répétitions (seaux) dans lesquels 3 plantes ont été introduites, totalisant 12 plantes par modalité.

À 29 jours post-repiquage (et donc de traitement), les plantes ont été récoltées. Le nombre moyen de talles par plantes ainsi que la biomasse aérienne et racinaire ont été quantifiés.

### Résultats

### Tallage

Indépendamment de la dose testée, l'extrait «FLM17 » a promu une augmentation du nombre de talles moyen par plante, par rapport aux plantes de la modalité témoin non-traité. Avec une augmentation de 42% du nombre de talles par plante, les plantes traitées à 700 µl de FLM17 / Litre de solution Hoagland présentaient un tallage moyen significativement (ANOVA au seuil =5%) supérieur au témoin non-traité (Figure 1).

### Production de biomasse sèche

Un gain moyen de production de biomasse aérienne et racinaire de l'ordre de 15% et 4% a été observé sur les plantes ayant été traitées avec l'extrait «FLM17» à 700 µL / Litre de solution Hoagland respectivement (Figure 2). Ceci converge et peut s'expliquer par l'augmentation du nombre de talles.

L'extrait FLM17 obtenu dans l'Exemple 1, provoque une stimulation du tallage du blé d'hiver par une augmentation du nombre de talles et une augmentation de la biomasse totale.

### Exemple 4 : Effet agronomique de l'extrait de phycobiliprotéines FLM17 obtenu dans l'Exemple 1, sur la phase de tallage d'un blé tendre d'hiver en conditions contrôlées

### Matériels et méthodes

### Dispositif expérimental

Des graines de blé tendre (*Triticum aestivum*) d'hiver, cv. Rubisko ont été semées dans des caisses noires opaques contenant de la vermiculite. Immédiatement après le semis, le substrat a été arrosé et les caisses ont été mises à l'abri de la lumière pendant 2 jours. Les plantules ont ensuite été déplacées et maintenues en chambre de croissance pendant 5 jours jusqu'au moment du repiquage.

Au septième jour après le semis (BBCH 11-12) les racines des plantules ont été nettoyées et ces dernières ont été repiquées dans des pots opaques de capacité de 5 litres, à raison de 6 plantes par pot. Un tuyau flexible d'environ 7 mm de diamètre relié à une pompe a été introduit dans chaque pot afin d'assurer l'aération constante de la solution nutritive en contact avec les racines. Ces pots ont été placés en serre dans les conditions suivantes :

**Tableau 2 : Conditions en serre lors de la réalisation de l'essai.**

| | |
|---|---|
| Température | 28°C le jour et 21°C la nuit |
| Hygrométrie | 70%-80% HR |
| Photopériode | 16 heures d'éclairage et 8 heures d'obscurité |

La solution nutritive a été produite sur place selon la recette classique Hoagland, adaptée aux besoins de la culture. Un renouvellement de cette solution pour tous les pots, ainsi que l'apport par voie liquide aux racines de l'extrait «FLM17» aux modalités traitées (Tableau 3) ont eu lieu 3 fois par semaine.

**Tableau 3 : Modalités testées sur l'essai en hydroponie sur blé tendre d'hiver.**

| **Modalité** | **Caractéristique de la modalité** |
|---|---|
| 1 | Solution Hoagland (Témoin non-traité ou TNT) |
| 2 | Solution Hoagland + 350 µl de FLM17 / Litre de solution Hoagland (correspondant à 2,45 mg de phycobiliprotéines/Litre de solution Hoagland) |
| 3 | Solution Hoagland + 700 µl de FLM17 / Litre de solution Hoagland (correspondant à 4,9 mg de phycobiliprotéines/Litre de solution Hoagland) |

Chaque modalité testée comptait 8 répétitions (seaux) dans lesquels 6 plantes ont été introduites, totalisant 48 plantes par modalité.

À partir de 14 jours de traitement en hydroponie (21 jours post-semis, c'est-à-dire 21 JAS), le comptage du nombre de feuilles par plante, du nombre total de plantes tallées par modalité ainsi que du nombre de talles par plante ont débuté. Ainsi, la dynamique de tallage a pu être établie. Deux récoltes distinctes ont été réalisées dans le cadre de cet essai :
1. Récolte intermédiaire à 28 JAS, et
2. Récolte finale à 51 JAS.

A la récolte intermédiaire, 12 plantes de chaque modalité ont été récoltées, conditionnées et plongées dans l'azote liquide avant d'être conservées sous congélation à -80°C. La deuxième moitié des plantes a été récoltée, conditionnée et mise à sécher à l'étuve, à 70°C.

Lors de la récolte intermédiaire les paramètres suivants ont été étudiés :
- Morphologie racinaire à l'aide d'un outil d'acquisition (EPSON Expression 10000 XL scanner, Japon) et de traitement d'images (WinrhizoTM, Canada);
- Masse sèche aérienne et racinaire.

A la récolte finale, 8 plantes de chaque modalité ont été récoltées, conditionnées et plongées dans l'azote liquide avant d'être conservées sous congélation à -80°C. Les 16 plantes restantes de chaque modalité ont été récoltées, conditionnées et mises à sécher à l'étuve, à 70°C.

Lors de la récolte finale la masse sèche aérienne et racinaire a été mesurée.

Le traitement statistique des données recueillies pour cet essai a été effectué à l'aide du logiciel R Studio. Le seuil alpha retenu lors des analyses de variance (ANOVA) et les tests post-hoc (Student-Newman-Keuls, SNK) a été de 5%.

### Résultats

### Récolte intermédiaire

### • Dynamique de tallage

Le nombre moyen de talles par plante des modalités traitées a été globalement supérieur à celui du témoin non-traité dès le premier comptage, où 41% des plantes traitées avaient tallé (les deux doses confondues) contre seulement 17% pour le témoin non-traité (Figure 3). Cet écart s'est maintenu jusqu'au dernier comptage, qui a eu lieu la veille de la récolte intermédiaire.

Cette précocité peut être bénéfique car ces structures ont plus de temps avant la fin de la phase de tallage pour devenir indépendantes de la tige principale, c'est-à-dire pour établir des racines pour leur subsistance.

### • Développement racinaire

La densité des racines nodales (racines de la couronne ou « crown roots » en anglais) dans la phase végétative est fortement corrélée avec le nombre de talles développées par certaines céréales parce qu'elles sont importantes pour le support physique et nutritionnel des plantes. Les racines séminales (« seminal roots » en anglais) sont également liées à l'absorption des nutriments et de l'eau, contribuant directement à la nutrition globale des plantes (NAKHFOROOSH et al., Wheat root diversity and root functional characterization, 2014; ROGERS & BENFEY, Regulation of plant root system architecture: implications for crop advancement, 2015).

Alors que l'apparition et le branchement des racines séminales, dites embryonnaires sont fortement dépendants de la génétique de la plante en question, ceux des racines nodales, dites post-embryonnaires, évolue en fonction des conditions environnantes (KUHHAM and BARRACLOUGH, Comparison between the seminal and nodal root systems of winter wheat in their activity for N and K uptake, 1986).

La Figure 4 montre que l'extrait «FLM17» stimule le développement racinaire, en particulier les racines nodales.

### Récolte finale

### • Dynamique de tallage

Le suivi de l'apparition de nouvelles talles a été réalisé jusqu'à la veille de la récolte finale, soit 50 JAS. La stimulation du tallage avec «FLM17» a été maintenue tout au long du traitement (Figure 5).

### • Production de biomasse sèche

Une légère augmentation de la masse sèche produite par les plantes à 51 JAS (récolte finale) a été mesurée (Figure 6).

En conclusion, l'extrait FLM17 obtenu dans l'Exemple 1, provoque une stimulation du tallage du blé d'hiver par une augmentation du nombre de talles, une accélération de la dynamique de tallage et une augmentation de la biomasse totale.

### Exemple 5 : Comparaison de l'effet agronomique de l'extrait de phycobiliprotéines FLM17 obtenu dans l'Exemple 1 et de l'effet agronomique de l'extrait enrichi en phycobiliprotéines FLM17 B obtenu dans l'Exemple 2, sur la phase de tallage d'un blé tendre d'hiver en conditions contrôlées

### Matériels et méthodes

Des graines de blé tendre (*Triticum aestivum*) d'hiver, cv. Rubisko ont été semées dans des caisses noires opaques contenant de la vermiculite. Immédiatement après le semis, le substrat a été arrosé avec de l'eau et les caisses ont été mises à l'abri de la lumière pendant 2 jours. Les plantules ont ensuite été déplacées et maintenues en chambre de croissance pendant 5 jours jusqu'au moment du repiquage.

Au septième jour après le semis (BBCH 11-12) les racines des plantules ont été nettoyées et ces dernières ont été repiquées dans des pots opaques de capacité de 5 litres, à raison de 3 plantes par pot. Un tuyau flexible d'environ 7 mm de diamètre relié à une pompe a été introduit dans chaque pot afin d'assurer l'aération constante de la solution nutritive en contact avec les racines. Ces pots ont été placés dans la même chambre de croissance tout du long de l'essai.

La solution nutritive a été produite selon la recette classique Hoagland, adaptée aux besoins de la culture. Un renouvellement de cette solution pour tous les pots, ainsi que l'apport par voie liquide aux racines des extraits « FLM17» et « FLM17 B » aux modalités traitées (Tableau 4) ont eu lieu tous les 2 jours.

**Tableau 4. Modalités testées sur l'essai en hydroponie sur blé tendre d'hiver.**

| **Modalité** | **Caractéristique de la modalité** | **Dose en µl** / **Litre de solution Hoagland** | **Teneur en phycobiliprotéines /L solution Hoagland** |
|---|---|---|---|
| 1 | Solution Hoagland (Témoin non-traité) | 0 | 0 |
| 2 | Solution Hoagland + 1400 µl de FLM17 / Litre de solution de Hoagland | 1400 µl | 9 mg |
| 3 | Solution Hoagland + 1400 µl de FLM 17 B / Litre de solution de Hoagland | 1400 µl | 22,5 mg |

Chaque modalité testée comptait 3 répétitions (seaux) dans lesquels 3 plantes ont été introduites, totalisant 12 plantes par modalité.

À 29 jours post-repiquage (et donc de traitement), les plantes ont été récoltées. Le nombre moyen de talles par plantes ainsi que la biomasse aérienne et racinaire ont été quantifiés.

### Résultats

### Tallage

L'extrait « FLM17 » a promu une augmentation du nombre de talles moyen par plante, par rapport aux plantes de la modalité témoin non-traité. Avec une augmentation de 44% du nombre de talles par plante, les plantes traitées par l'extrait FLM17 B présentaient un tallage significativement (ANOVA au seuil·=5%) supérieur au témoin non-traité et un tallage supérieur de 2,8 fois par rapport à l'extrait FLM17 (Figure 7).

Ces résultats montrent que l'enrichissement en phycobiliprotéines améliore de façon considérable le tallage du blé.

## Revendications

1. Utilisation d'un extrait enrichi en phycobiliprotéines comme engrais.

2. Utilisation selon la revendication 1, pour stimuler le tallage d'une plante et/ou pour stimuler le développement racinaire d'une plante et/ou pour stimuler le rendement d'une plante.

3. Utilisation selon l'une quelconque des revendications 1 à 2, dans laquelle la plante appartient à l'ordre des monocotylédones, de préférence à la famille des poacées, de préférence la plante est choisie parmi le blé, le riz, l'orge, l'avoine, le seigle, la canne à sucre, la prairie ou le maïs.

4. Utilisation selon l'une quelconque des revendications 1 à 3, dans laquelle l'extrait enrichi en phycobiliprotéines est un extrait de cyanobactéries, un extrait de rhodophycées, un extrait de glaucocystophycées ou un extrait de cryptophycées, de préférence un extrait de cyanobactéries, de préférence un extrait de cyanobactéries du genre *Arthrospira,* de préférence *Arthrospira platensis.*

5. Utilisation selon l'une quelconque des revendications 1 à 4, dans laquelle l'extrait enrichi en phycobiliprotéines la masse sèche de phycobiliprotéines dans l'extrait est d'au moins 10% de la masse totale de matière sèche de l'extrait.

6. Utilisation selon l'une quelconque des revendications 1 à 5, dans laquelle l'extrait enrichi en phycobiliprotéines est apporté au sol dans une quantité suffisante pour augmenter le tallage d'au moins 5%, avantageusement d'au moins 10%, au moins 15%, au moins 20%, au moins 25%, au moins 30%, au moins 40%.

7. Utilisation selon l'une quelconque des revendications 1 à 6, dans laquelle l'extrait enrichi en phycobiliprotéines est apporté au sol en une quantité de phycobiliprotéines allant de 0,1 à 5 kg/ha, de préférence allant de 0,2 à 3 kg/ha, de préférence environ 1 kg/ha.

8. Procédé pour stimuler le tallage et/ou le développement racinaire d'une plante, **caractérisé en ce qu'**il comprend l'apport au sol d'une quantité efficace d'un extrait enrichi en phycobiliprotéines.

9. Procédé selon la revendication 8, dans lequel la plante appartient à l'ordre des monocotylédones, de préférence à la famille des poacées, de préférence la plante est choisie parmi le blé, le riz, l'orge, l'avoine, le seigle, la prairie, la canne à sucre ou le maïs.

10. Procédé selon l'une quelconque des revendications 8 à 9, dans lequel l'extrait contenant des phycobiliprotéines est un extrait de cyanobactéries, un extrait de rhodophycées ou un extrait de glaucocystophycées, de préférence les cyanobactéries sont du genre *Arthrospira,* de préférence *Arthrospira platensis.*

11. Procédé selon l'une quelconque des revendications 8 à 10, dans lequel l'extrait enrichi en phycobiliprotéines la masse sèche de phycobiliprotéines dans l'extrait est d'au moins 10% de la masse totale de matière sèche de l'extrait.

12. Procédé selon l'une quelconque des revendications 8 à 11, dans lequel l'extrait enrichi en phycobiliprotéines est apporté au sol dans une quantité suffisante pour augmenter le tallage d'au moins 5%, avantageusement d'au moins 10%, au moins 15%, au moins 20%, au moins 25%, au moins 30%, au moins 40%.

13. Procédé selon l'une quelconque des revendications 8 à 12, dans lequel l'extrait enrichi en phycobiliprotéines est apporté au sol en une quantité de phycobiliprotéines allant de 0,1 à 5 kg/ha, de préférence allant de 0,2 à 3 kg/ha, de préférence environ 1 kg/ha.

14. Composition fertilisante comprenant un extrait enrichi en phycobiliprotéines contenant et (i) un amendement et/ou (ii) un engrais autre que des phycobiliprotéines ou un extrait en contenant, dans laquelle la masse sèche de phycobiliprotéines dans l'extrait est de préférence d'au moins 10% de la masse totale de la matière sèche de l'extrait.

15. Composition fertilisante selon la revendication 18, dans laquelle l'amendement est choisi parmi les amendements minéraux basiques de type calcaire et/ou calcaires et magnésiens, les amendements humifères de type composts ou les fumiers et/ou dans laquelle l'engrais est choisi parmi l'urée, le sulfate d'ammonium, le nitrate d'ammonium, le phosphate, le chlorure de potassium, du sulfate d'ammonium, le nitrate de magnésium, le nitrate de manganèse, le nitrate de zinc, le nitrate de cuivre, l'acide phosphorique, le nitrate de potassium et l'acide borique.
